# EUROPEAN PATENT APPLICATION

(11) **EP 4 501 713 A2**
(43) Date of publication of application: **05.02.2025**
(21) Application number: 24195173.0
(22) Date of filing: 30.04.2020
(51) Int. Cl.: B60R 16/02

(54) **SOFTWARE UPGRADE METHOD, APPARATUS, AND SYSTEM**

(30) Priority: 21.06.2019 CN 201910545209
(62) Divisional of application: 20825806.1
(71) Applicant: Shenzhen Yinwang Intelligent Technologies Co., Ltd., Shenzhen, Guangdong 518129 (CN)
(72) Inventor: HAN, Guanglin, Shenzhen, 518129 (CN); MA, Tao, Shenzhen, 518129 (CN)
(74) Representative: Pfenning, Meinig & Partner mbB

(57) **Abstract**

Embodiments of this application provides a software upgrade method, an apparatus, and a system. This can reduce a probability of incurring a security threat in a software upgrade process, and improve user experience. In the method, a vehicle-mounted terminal device obtains upgrade requirement information of a software package and a vehicle status corresponding to the vehicle-mounted terminal device, where the upgrade requirement information indicates a first status and/or a second status. If the vehicle status is associated with the first status, the vehicle-mounted terminal device starts an upgrade of the software package; or if the vehicle status is associated with the second status, the vehicle-mounted terminal device determines not to start an upgrade of the software package.

## Description

### CROSS-REFERENCE TO RELATED APPLICATIONS

This application claims priority to Chinese Patent Application No. 201910545209.9, filed with the China National Intellectual Property Administration on June 21, 2019 and entitled "SOFTWARE UPGRADE METHOD, APPARATUS, AND SYSTEM", which is incorporated herein by reference in its entirety.

### TECHNICAL FIELD

This application relates to the communications field, and in particular, to a software upgrade method, an apparatus, and a system.

### BACKGROUND

With the advent of a vehicle to everything (vehicle to everything, V2X) era, more and more vehicle-mounted terminal devices update software through over the air (over the air, OTA), and an OTA-based software update is usually referred to as software over the air (software over the air, SOTA).

Currently, when the vehicle-mounted terminal device upgrades software through SOTA, after obtaining an upgrade software package and before starting to install the upgrade software package, the vehicle-mounted terminal device requests an upgrade decision from a user by using a human-computer interaction interface. If the user confirms the upgrade, a software upgrade process is started. On the contrary, if the user does not agree to the upgrade, the software upgrade process is not started.

However, the user may directly determine to confirm the upgrade without fully understanding related information in the software upgrade process. As a result, a security risk may be incurred in the upgrade process, and user experience is degraded.

### SUMMARY

Embodiments of this application provide a software upgrade method, an apparatus, and a system, to reduce a probability of incurring a security threat in a software upgrade process, and improve user experience.

To achieve the foregoing objectives, the following technical solutions are used in the embodiments of this application.

According to a first aspect, a software upgrade method and a corresponding communications apparatus are provided. In this solution, a vehicle-mounted terminal device obtains upgrade requirement information of a software package and a vehicle status corresponding to the vehicle-mounted terminal device, where the upgrade requirement information indicates a first status and/or a second status. If the vehicle status is associated with the first status, the vehicle-mounted terminal device starts an upgrade of the software package, or if the vehicle status is associated with the second status, the vehicle-mounted terminal device determines not to start an upgrade process of the software package. In this embodiment of this application, the vehicle-mounted terminal device may determine, based on the upgrade requirement information and the vehicle status, whether to start a software upgrade, and start the upgrade when the vehicle status is associated with the first status. In this way, a probability of incurring a security threat in an upgrade process can be reduced, and user experience can be improved.

In a possible design, the first status indicates at least one of a geographical location of a vehicle, an environment in which the vehicle is located, or a driving status of the vehicle.

In a possible design, the second status indicates at least one of a geographical location of a vehicle, an environment in which the vehicle is located, or a driving status of the vehicle.

In a possible design, the software upgrade method provided in this embodiment of this application further includes: the vehicle-mounted terminal device receives the software package from a software server.

In a possible design, the software package received by the vehicle-mounted terminal device from the software server includes the upgrade requirement information. That a vehicle-mounted terminal device obtains upgrade requirement information of a software package includes: the vehicle-mounted terminal device obtains the upgrade requirement information in the software package.

In a possible design, that the software package includes the upgrade requirement information includes: the software package includes description information of the software package, and the description information includes the upgrade requirement information. That a vehicle-mounted terminal device obtains upgrade requirement information of a software package includes: the vehicle-mounted terminal device obtains the upgrade requirement information in the description information.

In a possible design, that a vehicle-mounted terminal device obtains upgrade requirement information of a software package includes: the vehicle-mounted terminal device determines preset upgrade requirement information as the upgrade requirement information of the software package.

According to a second aspect, a communications apparatus is provided and is configured to implement the foregoing methods. The communications apparatus may be the vehicle-mounted terminal device in the first aspect, or an apparatus including the vehicle-mounted terminal device, or an apparatus included in the vehicle-mounted terminal device. The communications apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing function.

According to a third aspect, a communications apparatus is provided, including a processor and a memory. The memory is configured to store a computer instruction, and when the processor executes the instruction, the communications apparatus is enabled to perform the method in any one of the foregoing aspects. The communications apparatus may be the vehicle-mounted terminal device in the first aspect, or an apparatus including the vehicle-mounted terminal device, or an apparatus included in the vehicle-mounted terminal device.

According to a fourth aspect, a communications apparatus is provided, including a processor. The processor is coupled to a memory and is configured to read an instruction in the memory, to perform the method in any one of the foregoing aspects according to the instruction. The communications apparatus may be the vehicle-mounted terminal device in the first aspect, or an apparatus including the vehicle-mounted terminal device, or an apparatus included in the vehicle-mounted terminal device.

According to a fifth aspect, a computer readable storage medium is provided. The computer readable storage medium stores an instruction, and when running on a computer, the instruction enables the computer to perform the method in any one of the foregoing aspects.

According to a sixth aspect, a computer program product including an instruction is provided. When the instruction is run on a computer, the computer is enabled to perform the method in any one of the foregoing aspects.

According to a seventh aspect, a communications apparatus (for example, the communications apparatus may be a chip or a chip system) is provided. The communications apparatus includes a processor, configured to implement a function in any one of the foregoing aspects. In a possible design, the communications apparatus further includes a memory, and the memory is configured to store a necessary program instruction and necessary data. When the communications apparatus is a chip system, the communications apparatus may include a chip, or may include a chip and another discrete device.

For technical effects brought by any design manner of the second to the seventh aspects, refer to the technical effects brought by different design manners of the first aspect. Details are not described herein again.

According to an eighth aspect, a communications system is provided. The communications system includes a software server and the vehicle-mounted terminal device described in the foregoing aspect.

### BRIEF DESCRIPTION OF DRAWINGS

FIG. 1 is a schematic structural diagram of a communications system according to an embodiment of this application;
FIG. 2 is a first schematic structural diagram of a vehicle-mounted terminal device according to an embodiment of this application;
FIG. 3 is a second schematic structural diagram of a vehicle-mounted terminal device according to an embodiment of this application;
FIG. 4 is a third schematic structural diagram of a vehicle-mounted terminal device according to an embodiment of this application;
FIG. 5 is a first schematic flowchart of a software upgrade method according to an embodiment of this application;
FIG. 6a is a second schematic flowchart of a software upgrade method according to an embodiment of this application;
FIG. 6b is a third schematic flowchart of a software upgrade method according to an embodiment of this application;
FIG. 7A and FIG. 7B are a fourth schematic flowchart of a software upgrade method according to an embodiment of this application; and
FIG. 8 is a fourth schematic structural diagram of a vehicle-mounted terminal device according to an embodiment of this application.

### DESCRIPTION OF EMBODIMENTS

The following describes the technical solutions in the embodiments of this application with reference to the accompanying drawings in the embodiments of this application. In descriptions of this application, unless otherwise specified, the character "/" represents an "or" relationship between associated objects, for example, A/B may represent A or B. The term "and/or" in this application describes only an association relationship for describing associated objects and represents that three relationships may exist. For example, A and/or B may represent the following three cases: Only A exists, both A and B exist, and only B exists. A and B may be in a singular or plural form. In addition, in the descriptions of this application, "a plurality of" means two or more than two. "At least one of the following items" or similar expression means any combination of these items, including a single item or any combination of a plurality of items. For example, at least one of a, b, or c may represent a, b, c, a and b, a and c, b and c, or a, b, and c, where a, b, and c may be a single one or a plurality of. In addition, to clearly describe the technical solutions in the embodiments of this application, terms such as "first" and "second" are used in the embodiments of this application to distinguish between same items or similar items with basically same functions or purposes. A person skilled in the art may understand that the terms such as "first" and "second" do not limit a quantity or an execution sequence, and the terms such as "first" and "second" do not mean being definitely different either.

The technical solutions in the embodiments of this application may be applied to various communications systems, for example, an orthogonal frequency division multiple access (orthogonal frequency-division multiple access, OFDMA) system, a single carrier frequency division multiple access (single carrier FDMA, SC-FDMA) system, and another system. The terms "system" and "network" can be interchanged with each other. The OFDMA system may implement wireless technologies such as evolved universal terrestrial radio access (evolved universal terrestrial radio access, E-UTRA) and ultra mobile broadband (ultra mobile broadband, UMB). E-UTRA is an evolved version of a universal mobile telecommunications system (universal mobile telecommunications system, UMTS). The 3rd generation partnership project (3rd generation partnership project, 3GPP) uses a new version of E-UTRA in long term evolution (long term evolution, LTE) and various versions based on LTE evolution. A 5th generation (5th generation, 5G) communications system is a next-generation communications system under study. The 5G communications system includes a 5G mobile communications system in non-standalone (non-standalone, NSAfor short) networking, a 5G mobile communications system in standalone (standalone, SA) networking, or a 5G mobile communications system in NSA networking and a 5G mobile communications system in SA networking. In addition, the communications system may be further applied to a future-oriented communications technology to which the technical solutions provided in the embodiments of this application are applicable. The foregoing communications system applicable to this application is merely an example for description, and the communications system applicable to this application is not limited thereto. Descriptions are provided in a centralized manner herein, and details are not described again below.

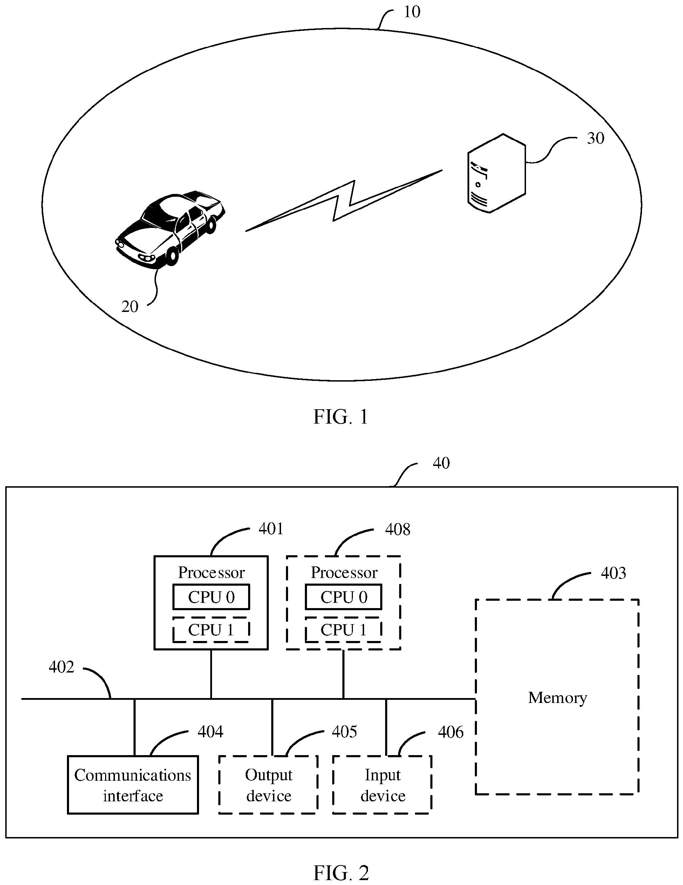

FIG. 1 shows a communications system 10 according to an embodiment of this application. The communications system 10 includes a vehicle-mounted terminal device 20 and a software server 30.

Optionally, the software server 30 in this embodiment of this application may be understood as a network side device, and may provide a software package for the vehicle-mounted terminal device.

Optionally, the vehicle-mounted terminal device in this embodiment of this application may be a vehicle (vehicle), or may be a terminal mounted on a vehicle to assist the vehicle in traveling, or a chip in a terminal. The terminal may be user equipment (user equipment, UE), an access terminal, a terminal unit, a terminal station, a mobile station, a mobile console, a remote station, a remote terminal, a mobile device, a wireless communications device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The vehicle-mounted terminal may be fixed or mobile.

Optionally, the vehicle-mounted terminal device 20 or the software server 30 in this embodiment of this application may also be referred to as a communications apparatus, and may be a general-purpose device or a dedicated device. This is not specifically limited in this embodiment of this application.

Optionally, the vehicle-mounted terminal device 20 or the software server 30 in FIG. 1 may be implemented by using a communications device (or a communications apparatus) 40 in FIG. 2. FIG. 2 is a schematic structural diagram of a communications device 40 according to an embodiment of this application. The communications device 40 includes one or more processors 401, a communications bus 402, and at least one communications interface (an example in which a communications interface 404 and a processor 401 are included is used for description in FIG. 2), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits for controlling program execution of the solutions in this application.

The communications bus 402 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is used to represent the bus in FIG. 2, but this does not mean that there is only one bus or only one type of bus. The communications bus 402 is configured to connect different components in the communications device 40, so that the different components can communicate with each other.

The communications interface 404 may be a transceiver module, configured to communicate with another device or a communications network, such as an Ethernet network, a radio access network (radio access network, RAN), or a wireless local area network (wireless local area networks, WLAN). For example, the transceiver module may be an apparatus such as a transceiver. Optionally, the communications interface 404 may be a transceiver circuit located in the processor 401, and is configured to implement signal input and signal output of the processor.

The memory 403 may be an apparatus having a storage function. For example, the memory 403 may be a read-only memory (read-only memory, ROM) or another type of static storage device capable of storing static information and an instruction, or a random access memory (random access memory, RAM) or another type of dynamic storage device capable of storing information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and can be accessed by a computer. However, this is not limited thereto. The memory may exist independently and is connected to the processor through the communications line 402. Alternatively, the memory may be integrated with the processor.

The memory 403 is configured to store a computer-executable instruction for executing the solutions in this application, and the processor 401 controls the execution. The processor 401 is configured to execute the computer-executable instruction stored in the memory 403, to implement the software upgrade method provided in the embodiments of this application.

Alternatively, optionally, in this embodiment of this application, the processor 401 may perform a related processing function in the software upgrade method provided in the following embodiment of this application. The communications interface 404 is responsible for communicating with another device or a communications network. This is not specifically limited in this embodiment of this application.

Optionally, the computer-executable instruction in this embodiment of this application may also be referred to as application program code. This is not specifically limited in this embodiment of this application.

During specific implementation, in an embodiment, the processor 401 may include one or more CPUs, such as a CPU 0 and a CPU 1 in FIG. 2.

During specific implementation, in an embodiment, the communications device 40 may include a plurality of processors, such as the processor 401 and a processor 408 in FIG. 2. Each of the processors may be a single-core (single-CPU) processor, or may be a multi-core (multi-CPU) processor. The processor herein may be one or more devices, circuits, and/or processing cores for processing data (such as a computer program instruction).

During specific implementation, in an embodiment, the communications device 40 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive user input in a plurality of manners. For example, the input device 406 may be a mouse, a keyboard, a touchscreen device, or a sensor device.

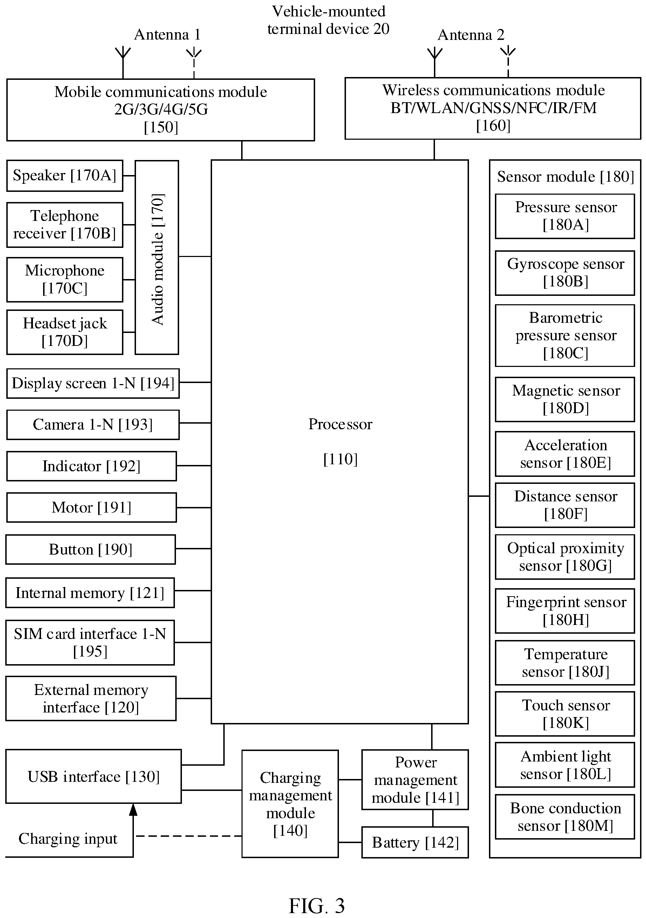

With reference to the schematic structural diagram of the communications device 40 shown in FIG. 2, for example, FIG. 3 is a specific structural form of a vehicle-mounted terminal device 20 according to an embodiment of this application.

In some embodiments, a function of the processor 401 in FIG. 2 may be implemented by a processor 110 in FIG. 3.

In some embodiments, a function of the communications interface 404 in FIG. 2 may be implemented by an antenna 1, an antenna 2, a mobile communications module 150, a wireless communications module 160, and the like in FIG. 3.

The antenna 1 and the antenna 2 are configured to transmit and receive an electromagnetic wave signal. Each antenna of the vehicle-mounted terminal device 20 may be configured to cover one or more communication frequency bands. Different antennas may be multiplexed to improve utilization of the antennas. For example, the antenna 1 may be multiplexed as a diversity antenna of a wireless local area network. In some other embodiments, the antenna may be used in combination with a tuning switch.

The mobile communications module 150 may provide a solution to wireless communication such as 2G/3G/4G/5G applied to the vehicle-mounted terminal device 20. The mobile communications module 150 may include at least one filter, a switch, a power amplifier, a low noise amplifier (low noise amplifier, LNA), and the like. The mobile communications module 150 may receive an electromagnetic wave over the antenna 1, perform processing such as filtering and amplification on the received electromagnetic wave, and transmit a processed electromagnetic wave to a modem processor for demodulation. The mobile communications module 150 may further amplify a signal modulated by the modem processor, and convert the signal into an electromagnetic wave for radiation over the antenna 1. In some embodiments, at least some function modules of the mobile communications module 150 may be disposed in the processor 110. In some embodiments, at least some function modules of the mobile communications module 150 and at least some modules of the processor 110 may be disposed in a same component.

The wireless communications module 160 may provide a solution to wireless communication applied to the vehicle-mounted terminal device 20, for example, a wireless local area network (wireless local area networks, WLAN) (for example, a Wi-Fi network), Bluetooth (blue tooth, BT), a global navigation satellite system (global navigation satellite system, GNSS), frequency modulation (frequency modulation, FM), near field communication (near field communication, NFC), and an infrared (infrared, IR) technology. The wireless communications module 160 may be one or more components into which at least one communication processing module is integrated. The wireless communications module 160 receives an electromagnetic wave over the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation over the antenna 2. When the vehicle-mounted terminal device 20 is a first device, the wireless communications module 160 may provide a solution to NFC wireless communication applied to the vehicle-mounted terminal device 20, which means that the first device includes an NFC chip. The NFC chip can improve an NFC wireless communication function. When the vehicle-mounted terminal device 20 is a second device, the wireless communications module 160 may provide a solution to NFC wireless communication applied to the vehicle-mounted terminal device 20, which means that the first device includes an electronic label (for example, a radio frequency identification (radio frequency identification, RFID) label). If an NFC chip of another device is close to the electronic label, the another device may perform NFC wireless communication with the second device.

In some embodiments, the antenna 1 and the mobile communications module 150 of the vehicle-mounted terminal device 20 are coupled, and the antenna 2 and the wireless communications module 160 are coupled, so that the vehicle-mounted terminal device 20 can communicate with a network and another device by using a wireless communications technology. The wireless communications technology may include long term evolution (long term evolution, LTE), BT, a GNSS, a WLAN, NFC, FM, an IR technology, or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

In some embodiments, a function of the memory 403 in FIG. 2 may be implemented by an internal memory 121 in FIG. 3, an external memory (for example, a micro SD card) connected to an external memory interface 120, or the like.

In some embodiments, a function of the output device 405 in FIG. 2 may be implemented by a display screen 194 in FIG. 3. The display screen 194 is configured to display an image, a video, and the like. The display screen 194 includes a display panel.

In some embodiments, a function of the input device 406 in FIG. 2 may be implemented by a mouse, a keyboard, a touchscreen device, or a sensor module 180 in FIG. 3. For example, as shown in FIG. 3, the sensor module 180 may include one or more of a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M. This is not specifically limited in this embodiment of this application.

In some embodiments, as shown in FIG. 3, the vehicle-mounted terminal device 20 may further include one or more of an audio module 170, a camera 193, an indicator 192, a motor 191, a button 190, a SIM card interface 195, a USB interface 130, a charging management module 140, a power management module 141, and a battery 142. The audio module 170 may be connected to a speaker 170A (also referred to as a "loudspeaker"), a telephone receiver 170B (also referred to as an "earpiece"), a microphone 170C (also referred to as a "receptor" or a "mike"), a headset jack 170D, or the like. This is not specifically limited in this embodiment of this application.

It may be understood that the structure shown in FIG. 3 does not constitute a specific limitation on the vehicle-mounted terminal device 20. For example, in some other embodiments of this application, the vehicle-mounted terminal device 20 may include more or fewer components than those shown in the figure, or combine some components, or split some components, or have different component arrangements. The components shown in the figure may be implemented by hardware, software, or a combination of software and hardware.

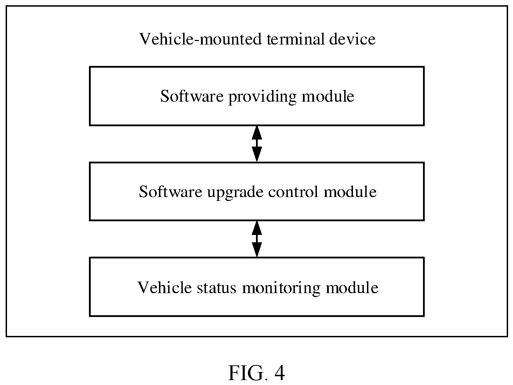

Optionally, in a possible design, a structural form of the vehicle-mounted terminal device 20 in this embodiment of this application may be alternatively shown in FIG. 4, and the vehicle-mounted terminal device 20 includes a software providing module, a software upgrade control module, and a vehicle status monitoring module. The software providing module is configured to: obtain a software package from a software server, and provide the obtained software package for the software upgrade control module. The software upgrade control module is configured to: receive the software package from the software providing module, and control a software upgrade of the vehicle-mounted terminal device. The vehicle status monitoring module is configured to: receive a vehicle status request, detect a vehicle status, and provide vehicle status information for the software upgrade control module. It should be noted that the software providing module, the software upgrade control module, and the vehicle status monitoring module may be understood as division of the vehicle-mounted terminal device from a perspective of logical functions, and may be physically separated, or may be deployed together. This is not specifically limited in this embodiment of this application.

Currently, when the vehicle-mounted terminal device is to upgrade software through SOTA, a decision of whether to perform the upgrade is completely left to a user. Because the user may not fully understand related information in a software upgrade process, for example, a time required for the software upgrade, or whether the vehicle-mounted terminal device can work normally in the software upgrade process, the user may directly determine to confirm the upgrade. As a result, a security risk may be incurred in the upgrade process, and user experience is degraded. Based on this, an embodiment of this application provides a software upgrade method. In the method, a vehicle-mounted terminal device obtains upgrade requirement information of a software package and a vehicle status corresponding to the vehicle-mounted terminal device. The upgrade requirement information indicates a first status and/or a second status. If the vehicle status is associated with the first status, the vehicle-mounted terminal device starts an upgrade of the software package, or if the vehicle status is associated with the second status, the vehicle-mounted terminal device determines not to start an upgrade of the software package. In this embodiment of this application, the vehicle-mounted terminal device may determine, based on the upgrade requirement information and the vehicle status, whether to start a software upgrade, and start the upgrade when the vehicle status is associated with the first status. In this way, a probability of incurring a security threat in an upgrade process can be reduced, and user experience can be improved.

With reference to FIG. 1 to FIG. 4, the following uses specific embodiment to describe in detail the software upgrade method provided in this application.

It should be noted that names of messages between the devices or modules, names of parameters in the messages, or the like in the following embodiments of this application are merely an example, and there may be other names during specific implementation. This is not specifically limited in this embodiment of this application.

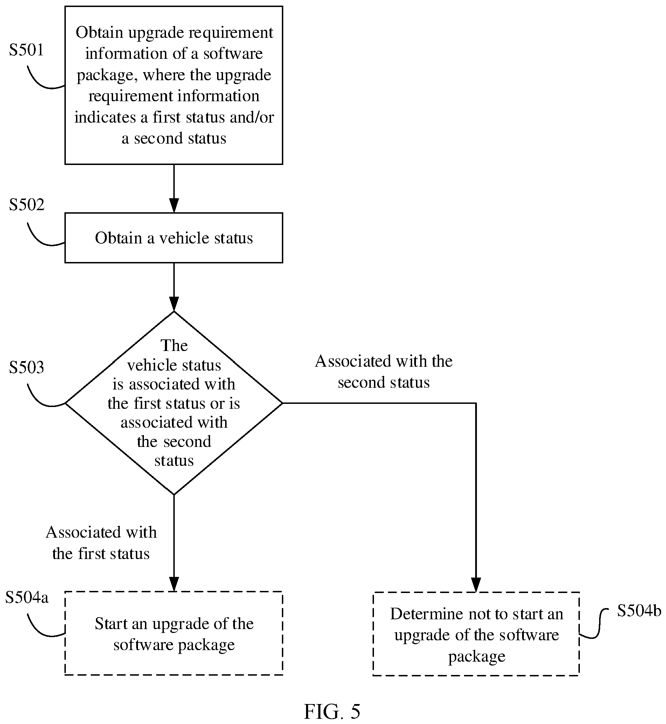

In a possible implementation, FIG. 5 shows a software upgrade method according to an embodiment of this application. The software upgrade method includes the following steps.

S501. A vehicle-mounted terminal device obtains upgrade requirement information of a software package.

Optionally, the vehicle-mounted terminal device may first determine information about the software package, obtain the upgrade requirement information associated with the software package, and then obtain the software package after determining that an upgrade of the software package may be started, or the vehicle-mounted terminal device may first obtain the software package, and then obtain the upgrade requirement information associated with the software package. This is not specifically limited in this embodiment of this application.

In a possible implementation, the vehicle-mounted terminal device may receive a notification message from a software server. The notification message carries information such as a software package identifier, to notify the vehicle-mounted terminal device that software indicated by the software package identifier has an updated version. After receiving the notification message, the vehicle-mounted terminal device may request, from the software server, the upgrade requirement information associated with the software package identifier, to obtain the upgrade requirement information of the software package indicated by the software package identifier

Optionally, if the vehicle-mounted terminal device does not request the upgrade requirement information of the software package indicated by the software package identifier, preset upgrade requirement information may be determined as the upgrade requirement information of the software package.

Alternatively, in another possible implementation, the vehicle-mounted terminal device may receive the software package from a software server. The software package includes a software package identifier. After receiving the software package, the vehicle-mounted terminal device may obtain the software package identifier from the software package, and request, from the software server, the upgrade requirement information associated with the software package identifier, to obtain the upgrade requirement information of the software package indicated by the software package identifier. Alternatively, the software package includes the upgrade requirement information. After receiving the software package, the vehicle-mounted terminal device may determine the upgrade requirement information included in the software package as the upgrade requirement information of the software package. Alternatively, the software package includes software package description information, and the software package description information includes the upgrade requirement information. After receiving the software package, the vehicle-mounted terminal device may determine the upgrade requirement information included in the software package description information as the upgrade requirement information of the software package. The software package identifier, the upgrade requirement information, or the software package description information included in the software package may be included in a header of the software package, or may be included in a tail of the software package, or may be included in another location of the software package. This is not specifically limited in this embodiment of this application.

Optionally, if the vehicle-mounted terminal device does not request the upgrade requirement information of the software package indicated by the software package identifier, or the software package received by the vehicle-mounted terminal device from the software server does not include the upgrade requirement information, preset upgrade requirement information may be determined as the upgrade requirement information of the software package.

Alternatively, in still another possible implementation, after obtaining the software package or information about the software package, the vehicle-mounted terminal device may directly determine preset upgrade requirement information as the upgrade requirement information of the software package.

The upgrade requirement information that is of the software package and that is obtained by the vehicle-mounted terminal device in the foregoing possible implementations indicates a first status and/or a second status. The first status may be a state in which a software upgrade is allowed to be started, and the second status may be a state in which a software upgrade is not allowed to be started.

Optionally, the first status may indicate at least one of a geographical location of a vehicle, an environment in which the vehicle is located, or a driving status of the vehicle. The second status may also indicate at least one of a geographical location of a vehicle, an environment in which the vehicle is located, or a driving status of the vehicle. The geographical location of the vehicle may be, for example, a parking lot, an urban road, a traffic control road section, or a high-speed road section. The environment in which the vehicle is located may be, for example, the daytime, the nighttime, a congested road section, or a body temperature of the vehicle. The driving status of the vehicle may be, for example, a braking state, a moving state, a high-speed state, a low-speed state, or a parking state.

Optionally, the upgrade requirement information may indicate the first status and/or the second status by using a field. For example, the upgrade requirement information may include two fields, where a first field indicates the first status, and a second field indicates the second status. When the upgrade requirement information indicates the first status, the second field may be null. For example, the upgrade requirement information may be " {parking lot, daytime, low-speed state}, {}". Alternatively, when the upgrade requirement information indicates the second status, the first field may be null. For example, the upgrade requirement information may be "{}, {high-speed road section, nighttime, high-speed state}. Alternatively, when the upgrade requirement information indicates the first status and the second status, the upgrade requirement information may be, for example, " {parking lot, daytime, low-speed state}, {high-speed road section, nighttime, high-speed state}". After obtaining the upgrade requirement information, the vehicle-mounted terminal device may determine the first status and/or the second status based on a field location of the upgrade requirement information.

For example, each of the foregoing fields may be represented by using six bits. Different values of the first two bits indicate the geographical location of the vehicle, different values of the middle two bits indicate the environment in which the vehicle is located, and different values of the last two bits indicate the driving status of the vehicle. For example, a value "11" of the first two bits indicates that the geographical location of the vehicle is a "parking lot", or a value "01" of the first two bits indicates that the geographical location of the vehicle is a "high-speed road section"; a value "11" of the middle two bits indicates that the environment in which the vehicle is located is the "daytime", or a value "10" of the middle two bits indicates that the environment in which the vehicle is located is the "nighttime"; and a value "11" of the last two bits indicates a low-speed state, or a value " 10" of the last two bits indicates a high-speed state. Particularly, when a value of the first two bits, the middle two bits, or the last two bits is "00", it indicates that a status indicated by the field imposes no limitation on the geographical location of the vehicle, the environment in which the vehicle is located, or the driving status of the vehicle. In this case, upgrade requirement information "{parking lot, daytime, low-speed state}, { }" may be represented as "{111111}, {000000}", upgrade requirement information "{}, {high-speed road section, nighttime, high-speed state}" may be represented as "{000000}, {011010}", and upgrade requirement information "{parking lot, daytime, low-speed state}, {high-speed road section, nighttime, high-speed state}" may be represented as "{111111}, {011010}".

Alternatively, each of the foregoing fields may be indicated in another manner, and the first field and the second field may be jointly indicated. For example, different values of three bits correspond to eight different statuses, and the eight statuses include both the first status and the second status. A representation manner of each field is not specifically limited in this embodiment of this application.

Alternatively, the upgrade requirement information may indicate the first status and/or the second status through mapping. For example, the upgrade requirement information may be: "first status: parking lot, daytime, and low-speed state; second status: high-speed road section, nighttime, and high-speed state".

For example, when the upgrade requirement information indicates the first status or the second status, the first status or the second status may be indicated by using seven bits, where a value of a first bit indicates a status indicated by the upgrade requirement information. For example, if the value of the first bit is "1", it indicates that the upgrade requirement information indicates the first status, or if the value of the first bit is "0", it indicates that the upgrade requirement information indicates the second status. The last six bits in the seven bits indicate content of the first status or the second status, where different values of the first two bits indicate the geographical location of the vehicle, different values of the middle two bits indicate the environment in which the vehicle is located, and different values of the last two bits indicate the driving statuses of the vehicle. A representation method is similar to the foregoing example. For related descriptions, refer to the foregoing example. Details are not described herein again. In this case, upgrade requirement information "first status: parking lot, daytime, low-speed state" may be represented as "1111111", or upgrade requirement information "second status: high-speed road section, nighttime, high-speed state" may be represented as "0011010".

Alternatively, for example, when the upgrade requirement information indicates the first status and the second status, the first status and the second status may be indicated by using 14 bits, where the first bit and the eighth bit are used to indicate statuses indicated by the upgrade requirement information, the second bit to the seventh bit represent content of a status indicated by the first bit, and the ninth bit to the fourteenth bit represent content of a status indicated by the eighth bit. For example, upgrade requirement information "first status: parking lot, daytime, low-speed state; second status: high-speed road section, nighttime, high-speed state" may be expressed as "11111110011010".

It may be understood that a manner in which the upgrade requirement information indicates the first status and/or the second status is merely an example for description in this application, and a form of the upgrade requirement information is not specifically limited in this embodiment of this application.

S502. The vehicle-mounted terminal device obtains a vehicle status.

The vehicle status may be a status of a vehicle corresponding to the vehicle-mounted terminal device, and the vehicle corresponding to the vehicle-mounted terminal device may be understood as a vehicle carrying the vehicle-mounted terminal device.

Optionally, the vehicle-mounted terminal device may obtain the vehicle status by using a sensor that is controlled by the vehicle-mounted terminal device and that is mounted in the vehicle corresponding to the vehicle-mounted terminal device.

S503. The vehicle-mounted terminal device determines whether the vehicle status is associated with the first status, or the vehicle-mounted terminal device determines whether the vehicle status is associated with the second status.

Optionally, that the vehicle status is associated with the first status may be understood as that the vehicle status is similar to the first status. For example, the first status is "the vehicle is in a parking lot", and the vehicle status obtained by the vehicle-mounted terminal device is "the vehicle is in an on-street parking space". Although the vehicle corresponding to the vehicle-mounted terminal device is not in a parking lot, the vehicle is in a geographical area that has a function similar to that of the parking lot. In this case, the vehicle-mounted terminal device may still determine that the vehicle status is associated with the first status.

Alternatively, that the vehicle status is associated with the first status may be understood as that the vehicle status is in a status range in which the first status is used as a reference and a preset status threshold is used as an offset. For example, the first status is "a body temperature of the vehicle is 30 degrees", and the preset status threshold is 5 degrees. In this case, when the body temperature of the vehicle is 25 degrees to 35 degrees, it may be considered that the vehicle status is associated with the first status.

Alternatively, that the vehicle status is associated with the first status may be understood as that the vehicle status is the first status. For example, the first status is a "low-speed state". If the vehicle status obtained by the vehicle-mounted terminal device is "a current speed of the vehicle is less than a maximum speed limit of a current road section", it may be considered that the vehicle is in a low-speed state, that is, the vehicle status is the first status. Alternatively, for example, the first status is "the vehicle is in a parking lot". If the vehicle status obtained by the vehicle-mounted terminal device is "the vehicle is in a parking lot", it may also be considered that the vehicle status is the first status.

It may be understood that, that the vehicle status is associated with the second status may also be understood as that the vehicle status is similar to the second status, or the vehicle status is in a status range in which the first status is used as a reference and a preset status threshold is used as an offset, or the vehicle status is the first status. For related descriptions, refer to the foregoing descriptions of the association between the vehicle status and the first status. Details are not described herein again.

Optionally, if the first status is a status set including a plurality of statuses, when the vehicle status is associated with any status in the status set included in the first status, the vehicle-mounted terminal device determines that the vehicle status is associated with the first status; or when the vehicle status is associated with all statuses in the status set included in the first status, the vehicle-mounted terminal device determines that the vehicle status is associated with the first status; or when a quantity of statuses associated with the vehicle status in the status set included in the first status exceeds a quantity threshold, the vehicle-mounted terminal device determines that the vehicle status is associated with the first status.

For example, the plurality of statuses included in the first status are " {parking lot, daytime, braking state}". When vehicle statuses obtained by the vehicle-mounted terminal device are "{parking lot, nighttime, low-speed state}", a vehicle status "parking lot" is associated with a status "parking lot" in the status set included in the first status, and the vehicle-mounted terminal device may determine that the vehicle status is associated with the first status. Alternatively, when vehicle statuses obtained by the vehicle-mounted terminal device are " {parking lot, daytime, braking state}", the vehicle statuses are associated with all statuses in the status set included in the first status, and the vehicle-mounted terminal device determines that the vehicle status is associated with the first status. Alternatively, when the quantity threshold is 2 and vehicle statuses obtained by the vehicle-mounted terminal device are " {parking lot, daytime, low-speed state}", a vehicle status "parking lot, daytime" is associated with "parking lot, daytime" in the status set included in the first status, and the vehicle-mounted terminal device determines that the vehicle status is associated with the first status.

It may be understood that when the second status is a status set including a plurality of statuses, the vehicle-mounted terminal device may also determine, by using the foregoing method for determining that the vehicle status is associated with the first status, whether the vehicle status is associated with the second status. Details are not described herein again.

Optionally, the vehicle-mounted terminal device may request an upgrade decision from a user by using a human-computer interaction interface, and after the user confirms an upgrade, the vehicle-mounted terminal device performs step S503 by receiving an instruction input by the user, so that a case in which the vehicle-mounted terminal device first performs step S503 to determine that the vehicle status is associated with the first status, but the instruction input by the user indicates that the user does not agree to the upgrade can be avoided, thereby reducing unnecessary determining performed by the vehicle-mounted terminal device, and reducing power consumption of the vehicle-mounted terminal device. Alternatively, the vehicle-mounted terminal device may first perform step S503, and when determining that the vehicle status is associated with the first status, the vehicle-mounted terminal device requests, by using an output of a human-computer interaction interface, an upgrade decision from a user, so that a case in which the user agrees to an upgrade but the vehicle status is associated with the second status and the upgrade cannot be started can be avoided, thereby reducing a quantity of human-computer interaction times, and improving user experience. It should be noted that a sequence of performing step S503 by the vehicle-mounted terminal device and requesting the upgrade decision from the user by using the human-computer interaction interface is merely an example for description in this application. This is not specifically limited in this embodiment of this application.

Optionally, step S504a is performed if the vehicle-mounted terminal device determines that the vehicle status is associated with the first status indicated by the upgrade requirement information, or step S504b is performed if the vehicle-mounted terminal device determines that the vehicle status is associated with the second status indicated by the upgrade requirement information.

S504a. Start an upgrade of the software package.

Optionally, when the vehicle status is associated with the first status, the vehicle-mounted terminal device may determine that the status of the vehicle corresponding to the vehicle-mounted terminal device allows the upgrade of the software package, thereby starting the upgrade of the software package. For a process of starting the upgrade of the software package, refer to the prior art. Details are not described herein.

S504b. Determine not to start an upgrade of the software package.

Optionally, when the vehicle status is associated with the second status, the vehicle-mounted terminal device may determine that the status of the vehicle corresponding to the vehicle-mounted terminal device does not allow the upgrade of the software package, thereby determining not to start the upgrade of the software package.

Based on the software upgrade method provided in this embodiment of this application, the vehicle-mounted terminal device obtains the upgrade requirement information of the software package and the vehicle status corresponding to the vehicle-mounted terminal device, and if the vehicle status is associated with the first status indicated by the upgrade requirement information, the vehicle-mounted terminal device starts the upgrade of the software package, or if the vehicle status is associated with the second status, the vehicle-mounted terminal device determines not to start the upgrade of the software package. In this embodiment of this application, the vehicle-mounted terminal device may determine, based on the upgrade requirement information and the vehicle status, whether to start a software upgrade, and start the software upgrade when the vehicle status is associated with the first status. In this way, a probability of incurring a security threat in an upgrade process can be reduced, and user experience can be improved.

Actions of the vehicle-mounted terminal device in steps S501 to S504a or steps S501 to S504b may be performed by the processor 401 in the communications device 40 shown in FIG. 2 by invoking the application program code stored in the memory 403. This is not limited in this embodiment of this application.

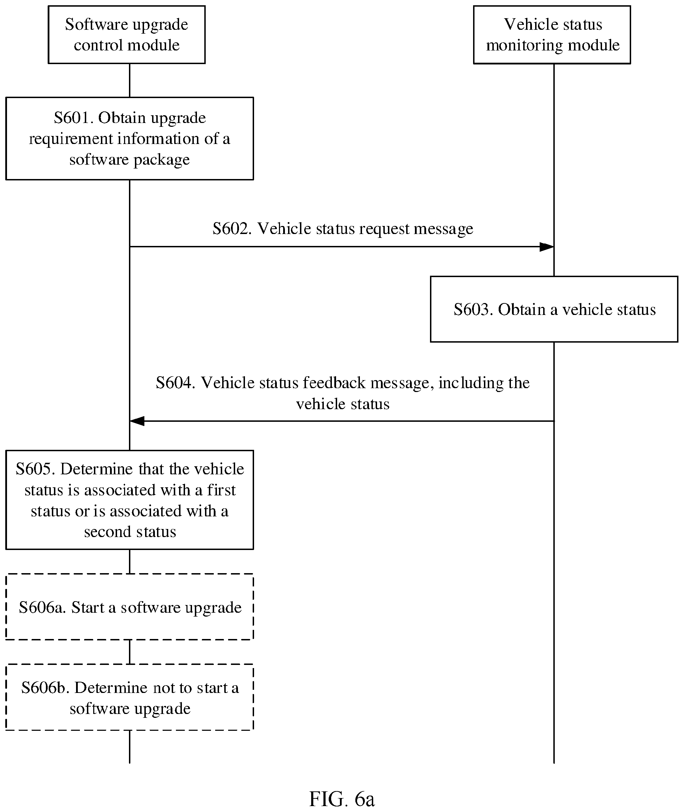

In another possible implementation, when a structure of the vehicle-mounted terminal device is shown in FIG. 4, for example, this application provides a solution for implementing the software upgrade method shown in FIG. 5 inside the vehicle-mounted terminal device. As shown in FIG. 6a, the solution includes the following steps.

S601. A software upgrade control module obtains upgrade requirement information of a software package.

Optionally, the software upgrade control module may first obtain the upgrade requirement information associated with the software package, and then obtain the software package after determining that an upgrade of the software package may be started, or the software upgrade control module may first obtain the software package, and then obtain the upgrade requirement information associated with the software package. This is not specifically limited in this embodiment of this application.

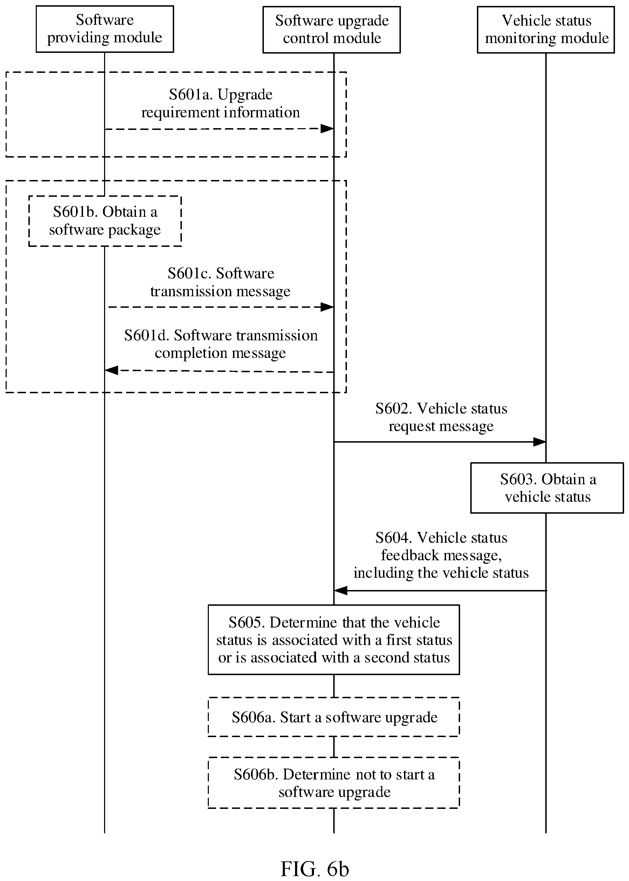

For example, as shown in FIG. 6b, that a software package upgrade control module obtains upgrade requirement information of a software package in step S601 may include the following steps.

S601a. A software providing module sends the upgrade requirement information of the software package to the software upgrade control module. Correspondingly, the software upgrade control module receives the upgrade requirement information of the software package from the software providing module.

In this case, before step S601a, the software upgrade method provided in this embodiment of this application further includes: the software providing module receives a notification message from a software server, where the notification message carries information such as a software package identifier, to notify the vehicle-mounted terminal device that software indicated by the software package identifier has an updated version. After receiving the notification message, the software providing module may request the upgrade requirement information associated with the software package identifier from the software server, and send the requested upgrade requirement information associated with the software package identifier to the software upgrade control module.

Alternatively, for example, as shown in FIG. 6b, that a software package upgrade control module obtains upgrade requirement information of a software package in step S601 may include the following steps.

S601b. A software providing module obtains the software package.

Optionally, the software providing module may receive the software package from a software server.

In a possible implementation, the software package includes a software package identifier. After receiving the software package, the software providing module may obtain the software package identifier from the software package, and request the upgrade requirement information associated with the software package identifier from the software server.

In another possible implementation, the software package includes the upgrade requirement information, or the software package includes software package description information, and the software package description information includes the upgrade requirement information.

S601c. The software providing module sends a software transmission message to the software upgrade control module. Correspondingly, the software providing module receives the software transmission message from the software upgrade control module.

In a possible implementation, when the software package obtained by the software providing module does not include the upgrade requirement information, the software transmission message includes the software package obtained by the software providing module and the upgrade requirement information associated with the software package. Optionally, in this implementation, the software upgrade control module determines the upgrade requirement information of the software package included in the software transmission message as the upgrade requirement information of the software package.

In another possible implementation, when the software package obtained by the software providing module includes the upgrade requirement information or the software description information, the software transmission message includes the software package obtained by the software providing module. Optionally, in this implementation, the software upgrade control module may determine the upgrade requirement information included in the software package as the upgrade requirement information of the software package.

S601d. The software upgrade control module sends a software transmission completion message to the software providing module. Correspondingly, the software providing module receives the software transmission completion message from the software upgrade control module.

The software transmission completion message is used to notify the software providing module that the software package is successfully transmitted.

Optionally, in addition to the foregoing two manners shown in FIG. 6b, the software upgrade control module may alternatively determine preset upgrade requirement information as the upgrade requirement information of the software package.

The upgrade requirement information of the software package indicates a first status and/or a second status, the first status may be a status in which a software upgrade is allowed to be started, and the second status may be a status in which the software upgrade is not allowed to be started. For descriptions of the upgrade requirement information, refer to the related descriptions in step S401. Details are not described herein again.

S602. The software control module sends a vehicle status request message to a vehicle status monitoring module. Correspondingly, the vehicle status monitoring module receives the vehicle status request message from the software control module.

The vehicle status request message is used to request a status of a vehicle corresponding to the vehicle-mounted terminal device, and the vehicle corresponding to the vehicle-mounted terminal device may be understood as a vehicle carrying the vehicle-mounted terminal device.

S603. The vehicle status monitoring module obtains a vehicle status.

Optionally, after receiving the vehicle status request message, the vehicle status monitoring module may collect the vehicle status by using a sensor controlled by the vehicle status monitoring module.

S604. The vehicle status monitoring module sends a vehicle status feedback message to the software upgrade control module. Correspondingly, the software upgrade control module receives the vehicle status feedback message from the vehicle status detection module.

The vehicle status feedback message includes the vehicle status collected by the vehicle status monitoring module.

S605. The software upgrade control module determines whether the vehicle status is associated with the first status, or the software upgrade control module determines whether the vehicle status is associated with the second status.

For descriptions of whether the vehicle status is associated with the first status or whether the vehicle status is associated with the second status, refer to the related descriptions in step S403. Details are not described herein again.

Optionally, step S606a is performed if the software upgrade control module determines that the vehicle status is associated with the first status indicated by the upgrade requirement information, or step S606b is performed if the software upgrade control module determines that the vehicle status is associated with the second status indicated by the upgrade requirement information.

S606a. The software upgrade control module starts an upgrade of the software package.

Optionally, when the vehicle status is associated with the first status, the software upgrade control module may determine that the status of the vehicle corresponding to the vehicle-mounted terminal device allows the upgrade of the software package, thereby starting the upgrade of the software package. For a process of starting the upgrade of the software package, refer to the prior art. Details are not described herein.

Optionally, if the software upgrade control module obtains the upgrade requirement information of the software package in the foregoing manner of step S601a, the software upgrade control module has not yet obtained the software package at this time. Therefore, before step S606a is performed, the software upgrade method provided in this embodiment of this application further includes the following steps.

The software providing module obtains the software package corresponding to the software package identifier included in the notification message.

The software providing module sends the software transmission message to the software providing module, where the software transmission message includes the software package corresponding to the software package identifier Correspondingly, the software providing module receives the software transmission message from the software upgrade control module.

The software upgrade control module sends the software transmission completion message to the software providing module, where the software transmission completion message is used to notify the software providing module that the software package is successfully transmitted. Correspondingly, the software providing module receives the software transmission completion message from the software upgrade control module.

S606b. The software upgrade control module determines not to start an upgrade of the software package.

Optionally, when the vehicle status is associated with the second status, the software upgrade control module may determine that the status of the vehicle corresponding to the vehicle-mounted terminal device does not allow the upgrade of the software package, thereby determining not to start the upgrade of the software package.

Based on the software upgrade method provided in this embodiment of this application, the software upgrade control module obtains the upgrade requirement information of the software package and the vehicle status corresponding to the vehicle-mounted terminal device, and if the vehicle status is associated with the first status indicated by the upgrade requirement information, the software upgrade control module starts the upgrade of the software package, or if the vehicle status is associated with the second status, the software upgrade control module determines not to start the upgrade of the software package. In this embodiment of this application, the software upgrade control module may determine, based on the upgrade requirement information and the vehicle status, whether to start a software upgrade, and start the upgrade when the vehicle status is associated with the first status. In this way, a probability of incurring a security threat in an upgrade process can be reduced, and user experience can be improved.

It should be noted that the solutions shown in FIG. 6a and FIG. 6b are merely internal implementation solutions of performing, by the vehicle-mounted terminal device, the software upgrade method shown in FIG. 5 according to this application. In actual application, the software upgrade method shown in FIG. 5 may further have another internal implementation solution. This is not specifically limited in this embodiment of this application.

Actions of the vehicle-mounted terminal device in steps S601 to S609a or steps S601 to S609b may be performed by the processor 401 in the communications device 40 shown in FIG. 2 by invoking the application program code stored in the memory 403. This is not limited in this application.

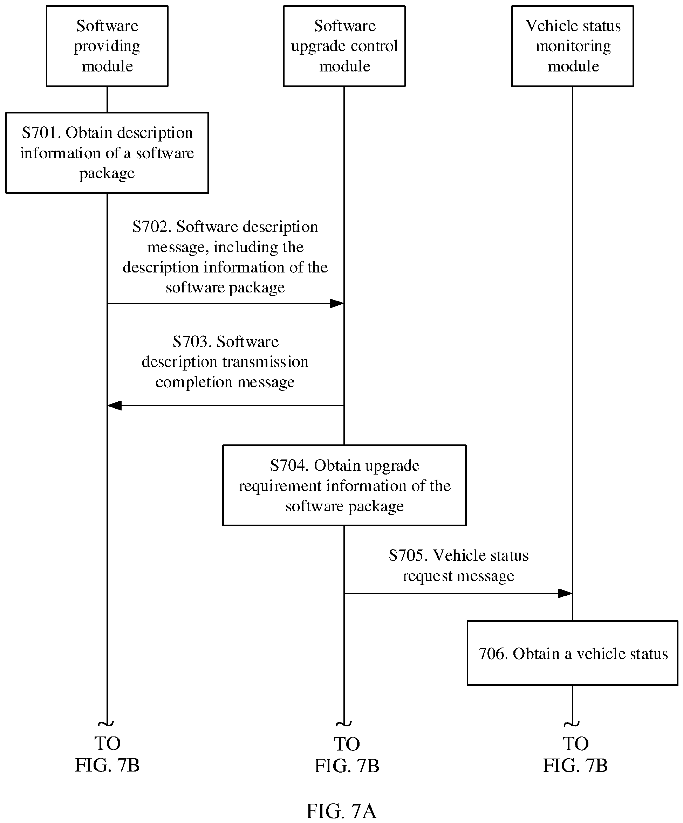

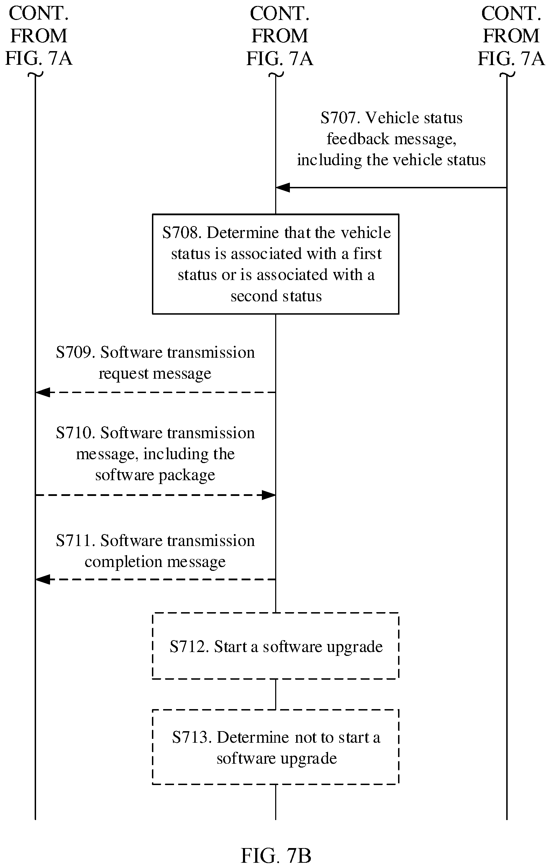

In still another possible implementation, when a structure of the vehicle-mounted terminal device is shown in FIG. 4, for example, this application provides another solution for implementing the software upgrade method shown in FIG. 5 inside the vehicle-mounted terminal device. As shown in FIG. 7A and FIG. 7B, the solution includes the following steps.

S701. A software providing module obtains description information of a software package.

The description information may include a software package identifier, upgrade requirement information, and the like.

In a possible implementation, the software providing module may receive a notification message from a software server. The notification message carries information such as a software package identifier, to notify the vehicle-mounted terminal device that software indicated by the software package identifier has an updated version. After receiving the notification message, the vehicle-mounted terminal device may request, from the software server, the description information of the software package corresponding to the software package identifier.

In another possible implementation, the software providing module may receive the software package from a software server, and the software package includes the description information.

S702. The software providing module sends a software description message to a software upgrade control module. Correspondingly, the software upgrade control module receives the software description message from the software providing module.

The software description message includes the description information of the software package obtained by the software providing module.

S703. The software upgrade control module sends a software description transmission completion message to the software providing module. Correspondingly, the software providing module receives the software description transmission completion message from the software upgrade control module.

The software description transmission completion message is used to notify the software providing module that the description information of the software package is successfully transmitted.

S704. The software upgrade control module obtains upgrade requirement information of the software package.

Optionally, the software upgrade control module may determine the upgrade requirement information included in the description information of the software package as the upgrade requirement information of the software package; or when the description information of the software package does not include the upgrade requirement information, the software upgrade control module may determine preset upgrade requirement information as the upgrade requirement information of the software package; or regardless of whether the description information of the software package includes the upgrade requirement information, the software control module determines preset upgrade requirement information as the upgrade requirement information of the software package.

The upgrade requirement information of the software package indicates a first status and/or a second status, the first status may be a status in which a software upgrade is allowed to be started, and the second status may be a status in which the software upgrade is not allowed to be started. For descriptions of the upgrade requirement information, refer to the related descriptions in step S401. Details are not described herein again.

S705. The software control module sends a vehicle status request message to a vehicle status monitoring module. Correspondingly, the vehicle status monitoring module receives the vehicle status request message from the software control module.

The vehicle status request message is used to request a status of a vehicle corresponding to the vehicle-mounted terminal device, and the vehicle corresponding to the vehicle-mounted terminal device may be understood as a vehicle carrying the vehicle-mounted terminal device.

S706. The vehicle status monitoring module obtains a vehicle status.

Optionally, after receiving the vehicle status request message, the vehicle status monitoring module may collect the vehicle status by using a sensor controlled by the vehicle status monitoring module.

S707. The vehicle status monitoring module sends a vehicle status feedback message to the software upgrade control module. Correspondingly, the software upgrade control module receives the vehicle status feedback message from the vehicle status detection module.

The vehicle status feedback message includes the vehicle status collected by the vehicle status monitoring module.

S708. The software upgrade control module determines whether the vehicle status is associated with the first status, or the software upgrade control module determines whether the vehicle status is associated with the second status.

For descriptions of whether the vehicle status is associated with the first status or whether the vehicle status is associated with the second status, refer to the related descriptions in step S403. Details are not described herein again.

Optionally, steps S709 to S712 are performed if the software upgrade control module determines that the vehicle status is associated with the first status indicated by the upgrade requirement information, or step S713 is performed if the software upgrade control module determines that the vehicle status is associated with the second status indicated by the upgrade requirement information.

S709. The software upgrade control module sends a software transmission request message to the software providing module. Correspondingly, the software providing module receives the software transmission request message from the software upgrade control module.

The software transmission request message is used to request, from the software providing module, the software package corresponding to the description information that is of the software package and that is included in the software description message.

S710. The software providing module sends a software transmission message to the software upgrade control module. Correspondingly, the software upgrade control module receives the software transmission message from the software providing module.

The software transmission message includes the software package corresponding to the description information that is of the software package and that is included in the software description message.

Optionally, in step S701, when the software providing module obtains the description information of the software package by using the notification message from the server, before step S710 is performed, the software upgrade method provided in this embodiment of this application further includes: the software providing module obtains the software package corresponding to the software package identifier included in the notification message.

S711. The software upgrade control module sends a software transmission completion message to the software providing module. Correspondingly, the software providing module receives the software transmission completion message from the software upgrade control module.

The software transmission completion message is used to notify the software providing module that the software package is successfully transmitted.

S712. The software upgrade control module starts an upgrade of the software package.

Optionally, when the vehicle status is associated with the first status, the software upgrade control module may determine that the status of the vehicle corresponding to the vehicle-mounted terminal device allows the upgrade of the software package, thereby obtaining the software package corresponding to the description information of the software package, to start the upgrade of the software package. For a process of starting the upgrade of the software package, refer to the prior art. Details are not described herein.

S713. The software upgrade control module determines not to start an upgrade of the software package.

Optionally, when the vehicle status is associated with the second status, the software upgrade control module may determine that the status of the vehicle corresponding to the vehicle-mounted terminal device does not allow the upgrade of the software package, thereby determining not to start the upgrade of the software package.

Based on the software upgrade method provided in this embodiment of this application, the software upgrade control module obtains the upgrade requirement information of the software package and the vehicle status corresponding to the vehicle-mounted terminal device. If the vehicle status is associated with the first status indicated by the upgrade requirement information, the software upgrade control module obtains the software package from the software providing module, and starts the upgrade of the software package, or if the vehicle status is associated with the second status, the software upgrade control module determines not to start the upgrade of the software package. In this embodiment of this application, the software upgrade control module may determine, based on the upgrade requirement information and the vehicle status, whether to start a software upgrade, and start the upgrade when the vehicle status is associated with the first status. In this way, a probability of incurring a security threat in an upgrade process can be reduced, and user experience can be improved. In addition, when determining that the vehicle status is associated with the first status, the software upgrade control module requests the software providing module to transmit the software package, thereby avoiding unnecessary software package transmission between the software providing module and the software upgrade control module when the vehicle status is associated with the second status.

It should be noted that the solution shown in FIG. 7A and FIG. 7B is merely a possible internal implementation solution of performing, by the vehicle-mounted terminal device, the software upgrade method shown in FIG. 5 according to this application. In actual application, the software upgrade method shown in FIG. 5 may further have another internal implementation solution. This is not specifically limited in this embodiment of this application.

Actions of the vehicle-mounted terminal device in steps S701 to S712 or steps S701 to S713 may be performed by the processor 401 in the communications device 40 shown in FIG. 2 by invoking the application program code stored in the memory 403. This is not limited in this embodiment of this application.

It may be understood that, in the foregoing embodiments, the method and/or the steps implemented by the vehicle-mounted terminal device may be alternatively implemented by a component (for example, a chip or a circuit) that can be used for the vehicle-mounted terminal device.

The foregoing mainly describes the solutions provided in the embodiments of this application from a perspective of interaction between network elements. Correspondingly, an embodiment of this application further provides a communications apparatus, and the communications apparatus is configured to implement the foregoing methods. The communications apparatus may be the vehicle-mounted terminal device in the foregoing method embodiment, or an apparatus including the vehicle-mounted terminal device, or a component that can be used for the vehicle-mounted terminal device. It may be understood that, to implement the foregoing function, the communications apparatus includes a corresponding hardware structure and/or software module for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the communications apparatus may be divided into function modules based on the foregoing method embodiment. For example, each function module may be obtained through division based on each corresponding function, or two or more functions may be integrated into one processing module. The integrated module may be implemented in a form of hardware, or may be implemented in a form of a software functional module. It should be noted that, in the embodiments of this application, module division is exemplary, and is merely a logical function division. In actual implementation, another division manner may be used.

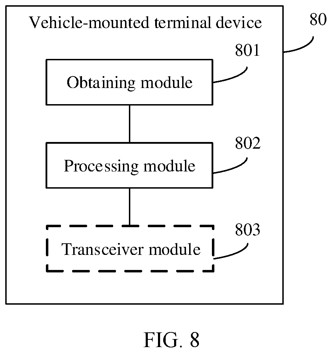

For example, the communications apparatus is the vehicle-mounted terminal device in the foregoing method embodiment. FIG. 8 is a schematic structural diagram of a vehicle-mounted terminal device 80. The vehicle-mounted terminal device 80 includes an obtaining module 801 and a processing module 802.

In a possible implementation, the obtaining module 801 is configured to obtain upgrade requirement information of a software package and a vehicle status corresponding to a vehicle-mounted terminal device, where the upgrade requirement information indicates a first status and/or a second status. If the vehicle status is associated with the first status, the processing module 802 is configured to start an upgrade of the software package, or if the vehicle status is associated with the second status, the processing module 802 is further configured to determine not to start an upgrade of the software package.

Optionally, the vehicle-mounted terminal device 80 may further include a transceiver module 803. The transceiver module 803 may also be referred to as a transceiver unit, and is configured to implement a sending function and/or a receiving function. For example, the transceiver module 803 may be a transceiver circuit, a transceiver, a transceiver, or a communications interface.

Optionally, the transceiver module 803 is configured to receive the software package from a software server.

Optionally, the software package received by the transceiver module 803 from the software server includes the upgrade requirement information, and that the obtaining module 801 is configured to obtain upgrade requirement information of a software package includes: the obtaining module 801 is configured to obtain the upgrade requirement information included in the software package.

Optionally, that the software package received by the transceiver module 803 from the software server includes the upgrade requirement information includes: the software package includes description information of the software package, and the description information includes the upgrade requirement information. That the obtaining module 801 is configured to obtain upgrade requirement information of a software package includes: the obtaining module 801 is configured to obtain the upgrade requirement information in the description information.

Optionally, that the obtaining module 801 is configured to obtain upgrade requirement information of a software package includes: the obtaining module 801 is configured to determine preset upgrade requirement information as the upgrade requirement information of the software package.

All content related to the steps in the foregoing method embodiments may be cited in function descriptions of corresponding function modules. Details are not described herein again.

In this embodiment, the vehicle-mounted terminal device 80 is presented in a form of function modules obtained through integration. The "module" herein may be a specific ASIC, a circuit, a processor and a memory for executing one or more software or firmware programs, an integrated logic circuit, and/or other components that can provide the foregoing functions. In a simple embodiment, a person skilled in the art may figure out that the vehicle-mounted terminal device 80 may be in a form of the communications device 40 shown in FIG. 2.

For example, the processor 401 in the communications device 40 shown in FIG. 2 may invoke the computer-executable instruction stored in the memory 403, so that the vehicle-mounted terminal device 80 performs the software upgrade method in the foregoing method embodiment.

Specifically, the function/implementation process of the obtaining module 801, the processing module 802, and the transceiver module 803 in FIG. 8 may be implemented by the processor 401 in the communications device 40 shown in FIG. 2 by invoking the computer-executable instruction stored in the memory 403. Alternatively, the function/implementation process of the obtaining module 801 and the processing module 802 in FIG. 8 may be implemented by the processor 401 in the communications device 40 shown in FIG. 2 by invoking the computer-executable instruction stored in the memory 403, and the function/implementation process of the transceiver module 803 in FIG. 8 may be implemented by using the communications interface 404 in the communications device 40 shown in FIG. 2.

Because the vehicle-mounted terminal device 80 provided in this embodiment may perform the foregoing software upgrade method, for a technical effect that can be obtained by the vehicle-mounted terminal device 80, refer to the foregoing method embodiment. Details are not described herein again.

Optionally, an embodiment of this application further provides a communications apparatus (for example, the communications apparatus may be a chip or a chip system). The communications apparatus includes a processor, configured to implement the method in any one of the foregoing method embodiments. In a possible design, the communications apparatus further includes a memory. The memory is configured to store a necessary program instruction and necessary data. The processor may invoke program code stored in the memory to instruct the communications apparatus to perform the method in any one of the foregoing method embodiments. Certainly, the memory may alternatively not be in the communications apparatus. When the communications apparatus is a chip system, the communications apparatus may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. In the embodiments of this application, the computer may include the foregoing apparatus.

Although this application is described with reference to the embodiments, in a process of implementing this application that claims protection, persons skilled in the art may understand and implement another variation of the disclosed embodiments by viewing the accompanying drawings, disclosed content, and the accompanying claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Further embodiments of the present invention are provided in the following. It should be noted that the numbering used in the following section does not necessarily need to comply with the numbering used in the previous sections.

Embodiment 1. A software upgrade method, wherein the method comprises:
Obtaining, by a vehicle-mounted terminal device, upgrade requirement information of a software package, wherein the upgrade requirement information indicates a first status and/or a second status;
Obtaining, by the vehicle-mounted terminal device, a vehicle status corresponding to the vehicle-mounted terminal device; and
if the vehicle status is associated with the first status, starting, by the vehicle-mounted terminal device, an upgrade of the software package; or
if the vehicle status is associated with the second status, determining, by the vehicle-mounted terminal device, not to start an upgrade of the software package.

Embodiment 2. The method according to embodiment 1, wherein the first status indicates at least one of a geographical location of a vehicle, an environment in which the vehicle is located, or a driving status of the vehicle; and
the second status indicates at least one of a geographical location of a vehicle, an environment in which the vehicle is located, or a driving status of the vehicle.

Embodiment 3. The method according to embodiment 1 or 2, wherein the method further comprises:
receiving, by the vehicle-mounted terminal device, the software package from a software server.

Embodiment 4. The method according to embodiment 3, wherein the software package comprises the upgrade requirement information; and
the obtaining, by a vehicle-mounted terminal device, upgrade requirement information of a software package comprises:
obtaining, by the vehicle-mounted terminal device, the upgrade requirement information in the software package.

Embodiment 5. The method according to embodiment 4, wherein that the software package comprises the upgrade requirement information comprises:
the software package comprises description information of the software package, and the description information comprises the upgrade requirement information; and
the obtaining, by a vehicle-mounted terminal device, upgrade requirement information of a software package comprises:
obtaining, by the vehicle-mounted terminal device, the upgrade requirement information in the description information.

Embodiment 6. The method according to any one of claims 1 to 3, wherein the obtaining, by a vehicle-mounted terminal device, upgrade requirement information of a software package comprises:
determining, by the vehicle-mounted terminal device, preset upgrade requirement information as the upgrade requirement information of the software package.

Embodiment 7. A communications apparatus, wherein the communications apparatus comprises an obtaining module and a processing module;
the obtaining module is configured to obtain upgrade requirement information of a software package, wherein the upgrade requirement information indicates a first status and/or a second status;
the obtaining module is further configured to obtain a vehicle status corresponding to the communications apparatus; and
if the vehicle status is associated with the first status, the processing module is configured to start an upgrade of the software package; or
if the vehicle status is associated with the second status, the processing module is further configured to determine not to start an upgrade of the software package.

Embodiment 8. The communications apparatus according to claim 7, wherein the first status indicates at least one of a geographical location of a vehicle, an environment in which the vehicle is located, or a driving status of the vehicle; and
the second status indicates at least one of a geographical location of a vehicle, an environment in which the vehicle is located, or a driving status of the vehicle.

Embodiment 9. The communications apparatus according to embodiment 7 or 8, wherein the communications apparatus further comprises a transceiver module; and
the transceiver module is configured to receive the software package from a software server.

Embodiment 10. The communications apparatus according to embodiment 9, wherein the software package comprises the upgrade requirement information; and
that the obtaining module is configured to obtain upgrade requirement information of a software package comprises:
the obtaining module is configured to obtain the upgrade requirement information in the software package.

Embodiment 11. The communications apparatus according to embodiment 10, wherein that the software package comprises the upgrade requirement information comprises:
the software package comprises description information of the software package, and the description information comprises the upgrade requirement information; and
that the obtaining module is configured to obtain upgrade requirement information of a software package comprises:
the obtaining module is configured to obtain the upgrade requirement information in the description information.

Embodiment 12. The communications apparatus according to any one of embodiments 7 to 9, wherein that the obtaining module is configured to obtain upgrade requirement information of a software package comprises:
the obtaining module is configured to determine preset upgrade requirement information as the upgrade requirement information of the software package.

Embodiment 13. A communications apparatus, wherein the communications apparatus comprises a software upgrade control module and a vehicle status monitoring module;
the software upgrade control module is configured to obtain upgrade requirement information of a software package, wherein the upgrade requirement information indicates a first status and/or a second status;
the vehicle status monitoring module is configured to obtain a vehicle status corresponding to the communications apparatus; and
if the vehicle status is associated with the first status, the software upgrade control module is further configured to start an upgrade of the software package; or
if the vehicle status is associated with the second status, the software upgrade control module is further configured to determine not to start an upgrade of the software package.

Embodiment 14. The communications apparatus according to embodiment 13, wherein the first status indicates at least one of a geographical location of a vehicle, an environment in which the vehicle is located, or a driving status of the vehicle; and
the second status indicates at least one of a geographical location of a vehicle, an environment in which the vehicle is located, or a driving status of the vehicle.

Embodiment 15. The communications apparatus according to embodiment 13 or 14, wherein the communications apparatus further comprises a software providing module; and
the software providing module is configured to receive the software package from a software server.

Embodiment 16. The communications apparatus according to embodiment 15, wherein the software package comprises the upgrade requirement information; and
that the software upgrade control module is configured to obtain upgrade requirement information of a software package comprises:
the software upgrade control module is configured to obtain the upgrade requirement information in the software package.

Embodiment 17. The communications apparatus according to embodiment 16, wherein that the software package comprises the upgrade requirement information comprises:
the software package comprises description information of the software package, and the description information comprises the upgrade requirement information; and
that the software upgrade control module is configured to obtain upgrade requirement information of a software package comprises:
the software upgrade control module is configured to obtain the upgrade requirement information in the description information.

Embodiment 18. The communications apparatus according to any one of embodiments 13 to 15, wherein that the software upgrade control module is configured to obtain upgrade requirement information of a software package comprises:
the software upgrade control module is configured to determine preset upgrade requirement information as the upgrade requirement information of the software package.

Embodiment 19. A communications apparatus, comprising a processor and a memory, wherein
the memory is configured to store a computer-executable instruction, and when the processor executes the computer-executable instruction, the communications apparatus is enabled to perform the method according to any one of embodiments 1 to 6.

Embodiment 20. A computer-readable storage medium, comprising an instruction, wherein when the instruction is run on a communications apparatus, the communications apparatus is enabled to perform the method according to any one of embodiments 1 to 6.

Although this application is described with reference to specific features and the embodiments thereof, obviously, various modifications and combinations may be made to them without departing from the spirit and scope of this application. Correspondingly, the specification and accompanying drawings are merely example description of this application defined by the accompanying claims, and is considered as any of or all modifications, variations, combinations or equivalents that cover the scope of this application. Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An upgrade method for a vehicle, comprising:
obtaining first upgrade requirement information associated with a first software package, wherein the first upgrade requirement information indicates a first judgment condition;
obtaining second upgrade requirement information associated with a second software package, wherein the second upgrade requirement information indicates a second judgment condition, and the first judgment condition is different from the second judgment condition;
determining whether the vehicle starts a first over the air, OTA, upgrade using the first software package based on the first judgment condition; and
determining whether the vehicle starts a second over the air, OTA, upgrade using the second software package based on the second judgment condition.

2. The method of claim 1, wherein the first judgment condition comprises a first status and/or a second status, and the determining whether the vehicle starts a first over the air, OTA, upgrade using the first software package based on the first judgment condition comprises:
starting, in response to a status of the vehicle being associated with the first status, the first OTA upgrade for the vehicle using the first software package, or determining not to start, in response to the status of the vehicle being associated with the second status, the second OTA upgrade for the vehicle using the second software package.

3. The method of claim 2, wherein the status of the vehicle being associated with the first status, comprises:
the status of the vehicle is similar to the first status, or the status of the vehicle is in a status range in which the first status is used as a reference and a preset status threshold is used as an offset, or the status of the vehicle is the first status; and
the status of the vehicle being associated with the second status, comprises:
the status of the vehicle is similar to the second status, or the status of the vehicle is in a status range in which the second status is used as a reference and a preset status threshold is used as an offset, or the status of the vehicle is the second status.

4. The method of claim 2 or 3, wherein the first status is a first status set comprising a plurality of statuses, and wherein the status of the vehicle being associated with the first status comprises:
the status of the vehicle being associated with a status in the first status set;
the status of the vehicle being associated with all statuses in the first status set; or
a quantity of statuses associated with the status of the vehicle in the first status set exceeds a quantity threshold; or
the second status is a second status set comprising a plurality of statuses, and wherein the status of the vehicle being associated with the second status comprises:
the status of the vehicle being associated with a status in the second status set;
the status of the vehicle being associated with all statuses in the second status set; or
a quantity of statuses associated with the status of the vehicle in the second status set exceeds a quantity threshold.

5. The method of any one of claims 1-4, wherein the first judgment condition indicates a geographical location of the vehicle, an environment in which the vehicle is located, or a driving status of the vehicle, and the second judgment condition indicates a geographical location of the vehicle, an environment in which the vehicle is located, or a driving status of the vehicle.

6. The method of claim 5, wherein the geographical location is a parking lot, an urban road, a traffic control road section, or a high-speed road section, the environment is a daytime, a nighttime, a congested road section, or a body temperature of the vehicle, and the driving status is a braking state, a moving state, a high-speed state, a low-speed state, or a parking state.

7. The method of any one of claims 1-6, wherein the determining whether the vehicle starts a first over the air, OTA, upgrade using the first software package based on the first judgment condition, comprises:
requesting an upgrade decision from a user by using a human-computer interaction interface;
determining that the status of the vehicle meets the first judgment condition by receiving an instruction input by the user indicating that the user confirms an upgrade;
starting the first OTA upgrade using the first software package.

8. The method of any one of claims 1-6, wherein the determining whether the vehicle starts a first over the air, OTA, upgrade using the first software package based on the first judgment condition, comprises:
determining that the status of the vehicle meets the first judgment condition;
requesting an upgrade decision from a user by using a human-computer interaction interface;
starting the first OTA upgrade using the first software package by receiving an instruction input by the user indicating that the user confirms an upgrade.

9. The method of any one of claims 1-8, wherein the obtaining the first upgrade requirement information, comprises:
obtaining the first upgrade requirement information based on a software package identifier, upgrade requirement information or description information in the first software package after obtaining the first software package; or
obtaining the first upgrade requirement information by requesting to a software server based on a notification message from the software server.

10. An upgrade apparatus for a vehicle, comprising units configured to perform the steps in the method according to any one of claims 1 to 9.

11. A computer-readable storage medium, comprising a program, wherein when the program is executed by a processor, the method according to any one of claims 1 to 9 is performed.
